# EUROPÄISCHE PATENTSCHRIFT

(11) **EP 2 150 724 B1**
(45) Veröffentlichungstag und Bekanntmachung des Hinweises auf die Patenterteilung: **22.02.2012**
(21) Anmeldenummer: 08758790.3
(22) Anmeldetag: 27.05.2008
(51) Int. Cl.: F16F 15/30

(54) **VERFAHREN UND VORRICHTUNG ZUM VERMINDERN VON DREHUNGLEICHFÖRMIGKEITEN DER KURBELWELLE EINER KOLBENBRENNKRAFTMASCHINE**
METHOD AND DEVICE FOR REDUCING ROTATIONAL NON-UNIFORMITIES OF THE CRANKSHAFT OF A PISTON INTERNAL COMBUSTION ENGINE
PROCÉDÉ ET DISPOSITIF POUR RÉDUIRE LES IRRÉGULARITÉS DE ROTATION DU VILEBREQUIN D'UN MOTEUR À COMBUSTION INTERNE À PISTONS

(30) Priorität: 31.05.2007 DE 102007025549
(43) Veröffentlichungstag der Anmeldung: 10.02.2010
(73) Patentinhaber: META MOTOREN- UND ENERGIE-TECHNIK GMBH, 52134 Herzogenrath (DE)
(72) Erfinder: KREUTER, Peter, 52072 Aachen (DE); VON ESSEN, Mathias, 52477 Alsdorf (DE)
(74) Vertreter: Kramer - Barske - Schmidtchen
(86) Internationale Anmeldenummer: PCT/EP2008/004205
(87) Internationale Veröffentlichungsnummer: WO 2008/145342

(56) Entgegenhaltungen:
- DE-A1- 19 649 712
- FR-A- 2 565 655

## Beschreibung

Die Erfindung betrifft ein Verfahren und eine Vorrichtung zum Vermindern von Drehungleichförmigkeiten der Kurbelwelle einer Kolbenbrennkraftmaschine.

Eine Eigenart der Drehung der Kurbelwelle von Kolbenbrennkraftmaschinen, insbesondere Hubkolbenbrennkraftmaschinen liegt darin, dass diese Drehung, hervorgerufen durch die Arbeitszyklen des oder der mit der Kurbelwelle verbundenen Kolben, ungleichförmig ist. Diese Ungleichförmigkeit nimmt mit abnehmender Zylinderzahl, niedrigen Drehzahlen und hohen Lasten zu. In der Praxis wird versucht, diesen Drehungleichförmigkeiten mit Hilfe großer Schwungmassen, die gegebenenfalls torsionsweich mit der Kwbelwelle verbunden sind, entgegenzuwirken. Ein weiterer Versuch, den Drehungleichförmigkeiten entgegenzuwirken, besteht darin, mit der Kurbelwelle eine Nokkenscheibe drehfest zu verbinden, die von einem gegen Federkraft bewegbaren Abtastglied abgetastet wird. In Phasen, in denen die Winkelgeschwindigkeit der Kurbelwelle verlangsamt werden soll, wird das Abtastglied gegen die Feder bewegt, so dass in dieser potentielle Energie gespeichert wird. Diese potentielle Energie kann in die Drehung der Kurbelwelle in Phasen rückgespeichert werden, in der die Winkelgeschwindigkeit der Kurbelwelle beschleunigt werden soll. Trotz aller bisherigen Maßnahmen weisen Motoren mit wenigen Zylindern, beispielsweise vier oder weniger Zylindern, gegenüber mehrzylindrigen Motoren Komfortnachteile auf, die ihre Akzeptanz nachteilig beeinflusst. Im Hinblick auf die zunehmende Bedeutung eines geringen Kraftstoffverbrauchs wird ein sogenanntes Downsizing der Motoren angestrebt, das wegen eines aus thermodynamischen Gründen bestimmten Mindestvolumens der einzelnen Zylinder zwangsläufig zu abnehmender Zylinderzahl führt.

Aus der DE 196 49 712 C2 ist eine antreibbare Welle mit bcschleunigungsabhängig änderbarem Trägheitsmoment bekannt. Eine bei einer Drehbeschleunigung der Welle sich aus einer Ruheposition relativ zur Welle entgegen deten Drehrichtung in eine Auslenkposition bewegende Trägheitsmasse bewegt bei ihrer Auslenkbewegung durch Übertragungsmittel mit der Welle drehfest verbundene, etwa radial zur Drehachse verschiebbar geführte Schwungmassenelemente in Richtung einer Verringerung des radialen Abstandes von der Drehachse. Die Trägheitsmasse ist als ein konzentrisch die Welle umschlingender Massenring ausgebildet, der mit jedem Schwungmassenelement durch die Übertragungsmittel verbunden ist. Wenn, ausgehend von einem Zustand, in dem die Schwungmassenelemente einen großen Abstand von der Welle haben, die Drehzahl der Welle zunimmt, bleibt der Massenring gegenüber der Welle zurück, so dass sich der Abstand zwischen den Schwungmassenelementen und der Welle verringert. Bei Beschleunigung der Welle nimmt somit das Trägheitsmoment der Anordnung ab, was die Beschleunigung der Welle verstärkt. Wenn die Drehzahl der Welle abnimmt, nimmt das Trägheitsmoment der Anordnung zu, wodurch die Abnahme der Drehzahl verstärkt wird. Insgesamt bewirkt die Anordnung ein besseres Ansprechverhalten der Brennkraftmaschine, indem sie das effektive Trägheitsmoment vermindert.

Aus der FR 2 565 655 A ist eine Vorrichtung zum Vermindern von Drehungleichförmigkeiten der Kurbelwelle einer Kolbenbrennkraftmaschine bekannt, bei der an der Kurbelwelle ein ringförmiges Trägheits- bzw. Ausgleichsmassebauteil mittels eines Bauteils aus elastischem Material befestigt ist. Infolge des elastischen Bauteils besteht jeweils eine Phasenverschiebung zwischen einer Drehwinkelgeschwindigkeitsänderung der Kurbelwelle und einer daraus resultierenden Drehwinkelgeschwindigkeitsänderung des Trägheitsmassebauteils.

Der Erfindung liegt die Aufgabe zugrunde, ein Verfahren und eine Vorrichtung anzugeben, mit dem bzw. der auch bei Kolbenbrennkraftmaschinen mit geringer Zylinderzahl, die Ungleichförmigkeit der Drehung der Kurbelwelle deutlich abgesenkt werden kann, so dass Kolbenbrennkraftmaschinen mit geringer Zylinderzahl die Ungleichförmigkeit der Drehung der Kurbelwelle deutlich abgesenkt werden kann, so dass Kolbenbrennkraftmaschinen mit geringer Zylinderzahl, bzw. einer Zylinderzahl von vier oder weniger, einen für anspruchsvollen Kunden akzeptablen Laufkomfort aufweisen.

Der das Verfahren betreffende Teil der Erfindungsaufgabe wird mit einem Verfahren gemäß dem Anspruch 1 gelöst.

Die Unteransprüche 2 und 3 sind auf vorteilhafte Durchführungsformen des erfindungsgemäßen Verfahrens gerichtet.

Der Anspruch 4 kennzeichnet die grundsätzliche Ausbildung einer erfindungsgemäßen Vorrichtung zur Lösung des diesbezüglichen Teils der Erfindungsaufgabe.

Die auf den Anspruch 4 rückbezogenen Unteransprüche sind auf vorteilhafte Ausführungsformen und Weiterbildungen der erfindungsgemäßen Vorrichtung gerichtet.

Eine Grundidee der Erfindung liegt darin, in Phasen, in denen die Kurbelwelle ein hohes Drehmoment abgibt, der Kurbelwelle Energie bzw. Leistung zu entziehen und in dem

Ausgleichsmassebauteil zu speichern. In Phasen, in denen die Kurbelwelle wenig Drehmoment abgibt oder selbst angetrieben werden muss, da der oder die mit ihr verbundenen Kolben Kompressions- oder Ausstoßarbeit verrichten, wird die in dem Ausgleichsmassebauteil gespeicherte Energie zurückgegeben. Dadurch, dass in dem Ausgleichsmassebauteil unmittelbar kinetische Energie gespeichert wird, sind keine aufwändigen Energiewandlungen erforderlich und arbeitet die Erfindung mit hohem Wirkungsgrad.

Die Erfindung wird im Folgenden anhand schematischer Zeichnungen beispielsweise und mit weiteren Einzelheiten erläutert.

Es stellen dar:
- Fig. 1 und 2: Stirnansichten einer erfindungsgemäßen Vorrichtung in unterschiedlichen Betriebszuständen,
- Fig. 3: Drehmomentverläufe eines 4-Zyliner Viertaktottomotors zur Erläuterung der Erfindung,
- Fig. 4: eine Tabelle, die Wechseldrehmomente für unterschiedliche Motorentypen zeigt,
- Fig. 5: eine schematische Stirnansicht einer gegenüber der Fig. 1 abgeänderten erfindungsgemäßen Vorrichtung,
- Fig. 6: eine schematische Ansicht einer Kolben-Zylindereinheit,
- Fig. 7: eine den Fig. 1 und 2 ähnliche Ansicht einer abgeänderten Ausführungsform der erfindungsgemäßen Vorrichtung,
- Fig. 8: eine Prinzipdarstellung einer Ausführungsform einer Verstellvorrichtung und
- Fig. 9: eine Skizze zur Erläuterung eines Massenausgleichs.

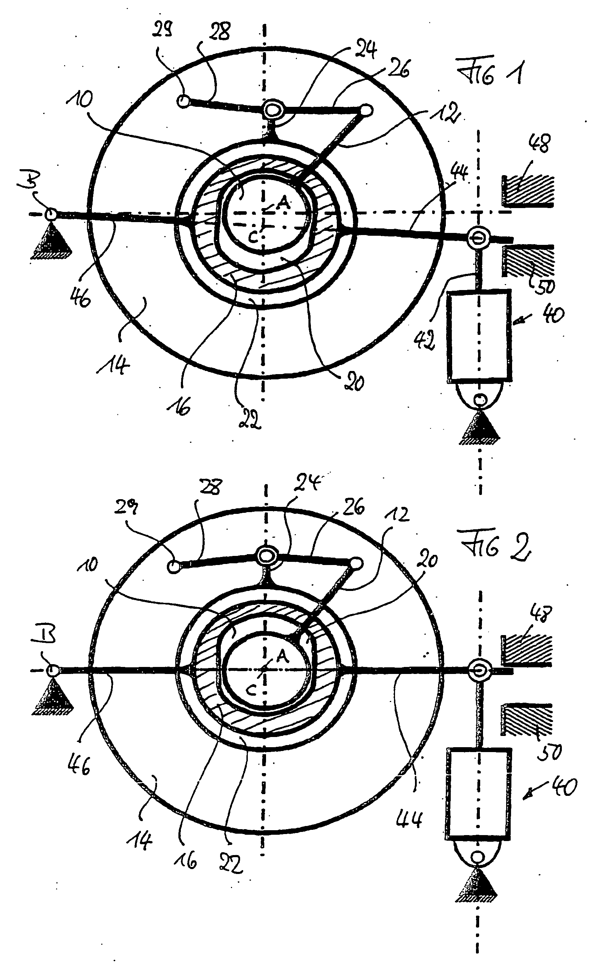

Gemäß Fig. 1, die eine Stirnansicht einer erfindungsgemäßen Vorrichtung zeigt, weist eine Kurbelwelle 10 einer in ihrem Aufbau an sich bekannten Hubkolbenbrennkraftmaschine einen radial vorstehenden Mitnehmeransatz 12 auf, der drehfest mit der Kurbelwelle 10 verbunden oder einteilig mit ihr ausgebildet ist. Auf der Kurbelwelle 10 ist neben dem Mitnehmeransatz 12 ein Ausgleichsmassebauteil 14 gelagert, das bezüglich der Drehachse A der Kurbelwelle 10 vorteilhafterweise ausgewuchtet ist.

Axial neben dem Ausgleichsmassebauteil 14 ist ein Lagerschild 16 (schraffiert; in Fig. 1 ist die axiale Anordnung nicht sichtbar) um eine von der Drehachse A der Kurbelwelle 10 entfernte Achse B an einem nicht dargestellten Motorgehäuse schwenkbar gelagert. Das Lagerschild 16 weist eine Durchgangsöffnung 20 auf, durch die hindurch sich die Kurbelwelle 10 erstreckt, so dass die geschilderte Baugruppe an einem Stirnende der Kurbelwelle oder in einem mittleren Bereich der Kurbelwelle angeordnet sein kann. Die Schwenkachse B ist parallel zur Drehachse A der Kurbelwelle. An dem relativ zur Kurbelwelle verschwenkbaren Lagerschild 16 ist eine Führungskoppel 22 drehbar gelagert, von der ein radialer Arm 24 vorsteht.

Der radiale Arm ist über ein Koppelglied 26 mit dem Mitnehmeransatz 12 verbunden und über ein weiteres Koppelglied 28 in einem Gelenk 29 mit dem Ausgleichsmassebauteil 14 verbunden. Die Koppelglieder 26 und 28 sind vorteilhafterweise gleichachsig an dem Arm 24 der Führungskoppel 22 angelenkt. Das Koppelglied 28 ragt bspw. in einen radialen Schlitz (nicht dargestellt) des Ausgleichmassebauteils 14 ein und ist darin mittels eines Zapfens gelagert. Die Schwenkachsen der Gelenke, um die die Koppelglieder relativ zueinander und zu dem Mitnehmeransatz 12, der Führungskoppel 22 und dem Ausgleichsmassenbauteil 14 schwenkbar sind, sind zueinander parallel und parallel zu den Achsen A und B.

Durch Verschwenken des Lagerschildes 16 um das motorgehäusefeste Lager mit der Achse B lässt sich der Abstand zwischen der Drehachse C, um die die Führungskoppel 22 dreht und der Drehachse A der Kurbelwelle verändern. Zum Verschwenken des Lagerschildes 16 ist eine insgesamt mit 40 bezeichnete Verstellvorrichtung vorgesehen, die ein Stellglied 42 aufweist, das mit einem Arm 44 gelenkig verbunden ist, der starr mit dem Lagerschild 16 verbunden ist. Etwa in Verlängerung des Arms 44 weist das Lagerschild 16 auf seiner entgegen gesetzten Seite einen weiteren, mit ihm starr verbundenen Arm 46 auf, der um die Schwenkachse B schwenkbar ist. Das Stellglied 42 kann in an sich bekannter Weise mittels eines Hydraulikzylinders oder eines Elektromotors gemäß Figur 1 in Senkrechtrichtung bewegt werden, wobei die Bewegbarkeit vorteilhafterweise durch Anschläge 48 und 50 begrenzt ist.

Die geschilderte Vorrichtung kann bei in einander geschachtelter Bauweise sehr kompakt bauen. Das Ausgleichsmassebauteil 14 ist zwischen der Führungskoppel 22 und dem Mitnehmeransatz 12 auf der Kurbelwelle gleichachsig mit der Drehachse A der Kurbelwelle drehbar gelagert. Die Führungskoppel 22 ist um die durch das Lagerschild 16 definierte Drehachse C drehbar gelagert. Achsial neben der Führungskoppel 22 erstrecken sich die Arme 44 und 46 des Lagerschildes 16. Es versteht sich, dass die relativ zur Kurbelwelle exzentrische Schwenkbarkeit des Lagerschildes 16 und dessen Verstellung auch durch andere Konstruktionen gewährleistet sein kann, bspw. dadurch, dass das Lagerschild unmittelbar mit einem Zapfen im Motorgehäuse gelagert ist, der exzentrisch zur Drehachse der Kurbelwelle angeordnet ist.

Figur 1 stellt den Zustand der Anordnung dar, bei der die Drehachse C der Führungskoppel 22 einen maximalen Abstand von der Drehachse A der Kurbelwelle 10 hat. Die Verbindungslinie zwischen den Drehachsen A und C ist vorteilhafterweise parallel zur Bewegungsrichtung der mit der Kurbelwelle 10 verbunden, nicht dargestellten Kolben der Brennkraftmaschine und deckt sich in der dargestellten Aufsicht vorteilhafterweise mit der Bewegungslinie der Kolben. Geringfügige Richtungsänderungen der Verbindungslinie bei einem Verschwenken des Lagerschildes 16 um die Schwenkachse B können außer Betracht bleiben. Die Anordnung des Mitnehmeransatzes 12, des radialen Arms 24 und der Koppelglieder 26 und 28 ist derart, dass die Koppelglieder 26 und 28 während einer Umdrehung der Kurbelwelle 10 bzw. der dazu exzentrischen Umdrehung der Führungskoppel 22 zweimal eine Strecklage durchlaufen, so dass die Ausgleichsmasse 14 der Kurbelwelle 10 während einer Umdrehung zweimal vorläuft bzw. nacheilt bzw. sich mit größer und kleinerer Geschwindigkeit als die Kurbelwelle dreht. Die Voreilung bzw. der Nachlauf kann durch die geometrische Anordnung der Koppelglieder an die jeweiligen Erfordernisse angepasst werden.

Figur 2 zeigt den Zustand der Anordnung der Figur 1, bei dem die Drehachsen A und C zusammen fallen, das heißt der Zustand maximale Exzentrizität gemäß Figur 1 in den Zustand minimaler Exzentrizität verstellt ist, bei dem die Führungskoppel 22 sich gleichachsig zur Kurbelwelle 10 dreht. In diesem Zustand bleibt die Relativstellung zwischen dem Mitnehmeransatz und den Koppelgliedern 26 und 28 und dem radialen Arm 24 konstant, so dass sich das Ausgleichsmassebauteil 14 jeweils mit gleicher Winkelgeschwindigkeit wie die Kurbelwelle 16 dreht.

Im Unterschied dazu muss in der Stellung gemäß Figur 1 das Ausgleichsmassebauteil 14 von der Kurbelwelle zyklisch beschleunigt und verzögert werden, so dass von der Kurbelwelle in Phasen der Drehung, in der das Ausgleichmassebauteil beschleunigt wird, ein zusätzliches Drehmoment auf das Ausgleichsmassebauteil aufgebracht werden muss und in anderen Phasen der Drehung, in der sich die Winkelgeschwindigkeit des Ausgleichmassebauteils relativ zur Kurbelwelle vermindert, von dem Ausgleichsmassebauteil ein zusätzliches Drehmoment erfährt.

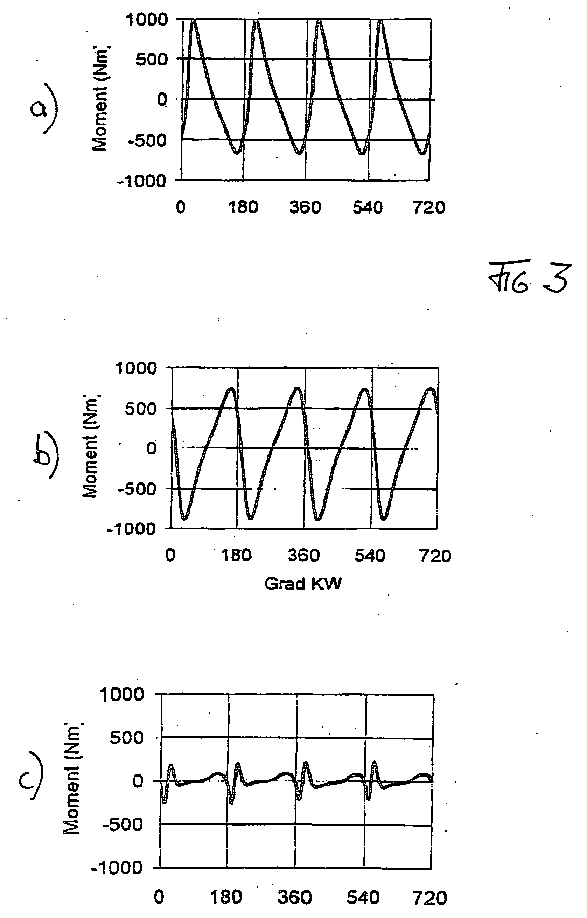

Fig. 3a) zeigt einen typischen Verlauf des Drehmoments eines aufgeladenen 4-Zylinder Ottomotors, der im Viertaktverfahren betrieben wird und beispielsweise mit einer Drehzahl von 1000/min bei Volllast dreht. Die Abszisse gibt jeweils die Drehstellung der Kurbelwelle in Grad an, die Ordinate gibt das von der Kurbelwelle in den Antriebsstrang des Fahrzeugs wirkende Drehmoment an. Mit zunehmender Last werden die Drehmomentschwankungen größer und machen sich mit abnehmender Drehzahl zunehmend unangenehm im Antriebsstrang bemerkbar, sei es durch Beschleunigungsschwankungen des gesamten Fahrzeugs, sei es durch Geräusche oder Vibrationen, die für die Fahrzeuginsassen jeweils komfortmindernd spürbar sind.

Der Figurenteil b) der Figur 3 zeigt das mit der vorstehend geschilderten erfindungsgemäßen Vorrichtung erzeugbare, von der Ausgleichsmasse 14 auf die Kurbelwelle 10 aufbringbare Drehmoment. Wie ersichtlich ist zur Beschleunigung des Ausgleichsmassebauteils in den Phasen, in denen die Kurbelwelle ein hohes positives Drehmoment erzeugt, zur Beschleunigung des Ausgleichsmassebauteils ein negatives Drehmoment erforderlich und umgekehrt gibt das Ausgleichsmassebauteil unter Abbremsung in den Phasen, in denen die Kurbelwelle in Folge der Kolben ein negatives Drehmoment abgibt, ein positives Drehmoment an die Kurbelwelle ab. In der Summe ergibt sich durch Ausrüstung einer an sich bekannten Brennkraftmaschine mit der erfindungsgemäßen Vorrichtung an der Kurbelwelle ein Summenmoment, das in Figur 13c dargestellt ist und dessen Schwankungen gegenüber den Drehmomentschwankungen der Figur 3a erheblich vermindert sind. Somit wird mit der erfindungsgemäßen Vorrichtung ein sehr komfortabler Gleichlauf der Kolbenbrennkraftmaschine erzielt, auch wenn diese nur eine geringe Zylinderzahl hat. Es sei noch darauf hingewiesen, dass in Figur 3 die Drehmomentschwankungen dargestellt sind. Insbesondere in den Darstellungen a und c müssten die Kurven um das mittlere, von der Kurbelwelle an das Fahrzeug abgegebene Moment nach oben verschoben werden. Durch Verschwenken des Lagerschildes 16 kann die Vorrichtung jeweils an den Ausgleichsbedarf angeglichen werden. Bei hohen Schwankungen wird somit mit großer Exzentrizität bzw. großen Abstand zwischen den Drehachsen A und C gearbeitet. Bei kleineren Schwankungen wird die Exzentrizität vermindert.

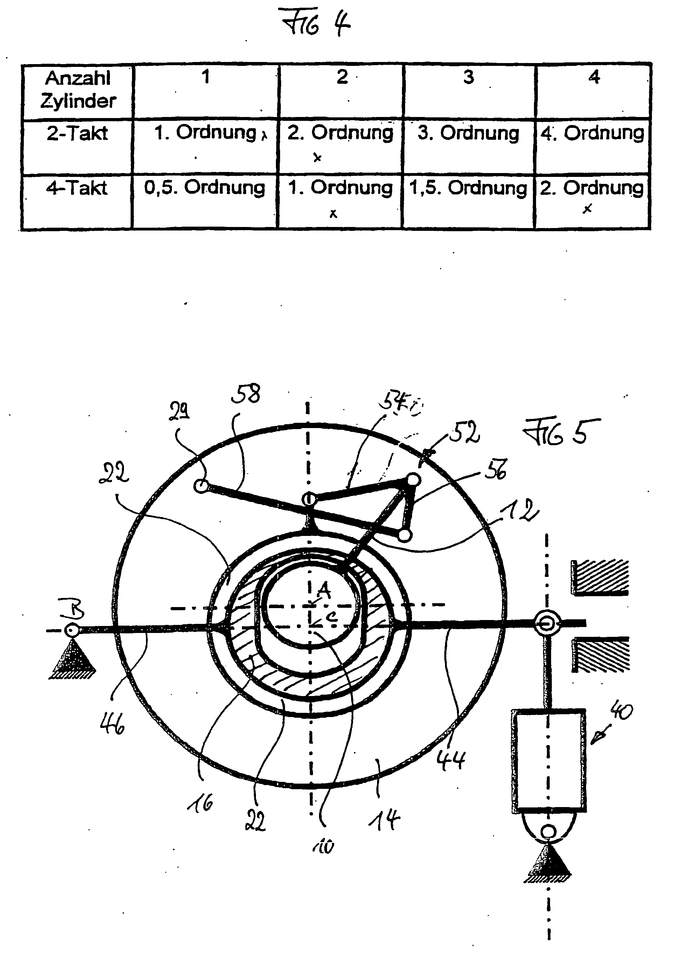

Fig. 4 zeigt tabellarisch für Brennkraftmaschinen mit unterschiedlicher Zylinderzahl und unterschiedlichem Betrieb (Zweitaktverfahren, Viertaktverfahren) die Hauptordnungen des in Fig. 3a) dargestellten Wechseldrehmoments, die ausgeglichen werden müssen.

Die in Figur 1 und 2 dargestellte Anordnung eignet sich zur Verringerung der Drehmomentschwankungen an der Kurbelwelle für die zweite Ordnung eines 2-Zylinder Zweitaktmotors oder eines 4-Zylinder Viertaktmotors.

Bei der Ausführungsform der erfindungsgemäßen Vorrichtung gemäß Figur 5 wird die exzentrische bzw. Hubbewegung der Führungskoppel 22 relativ zur Kurbelwelle 10 durch Verschwenken des Koppelgliedes 52 in eine Relativdrehung zwischen dem Ausgleichsmassebauteil 14 und der Kurbelwelle 10 umgewandelt. Diese Verschwenkung erfolgt während einer Umdrehung der Kurbelwelle einmal, so dass sich die Ausführungsform gemäß Figur 5 zur Verringerung von Drehmomentschwankungen an der Kurbelwelle für die erste Ordnung bei einem 1-Zylinder Zweitaktmotor oder einem 2-Zylinder Viertaktmotor eignet.

Die erfindungsgemäße Vorrichtung kann auch für einen Ausgleich von Drehmomentschwankungen bzw. Drehungleichförmigkeiten an der Kurbelwelle anderen Motoren, bspw. 3-Zylindermotoren verwendet werden, in dem bspw. der Mitnehmeransatz 12 nicht starr mit der Kurbelwelle verbunden wird, sondern über ein Übersetzungs- bzw. Untersetzungsgetriebe mit der Kurbelwelle verbunden wird, in Folge derer der Mitnehmeransatz mit einer zum Ausgleich von Drehmomentschwankungen geeigneten Drehzahl dreht, bspw. bei einem 3-Zylindermotor mit um den Faktor 1,5 erhöhten Drehzahl im Vergleich zur Ausbildung der jeweiligen Vorrichtung für einen 2-Zylindermotor.

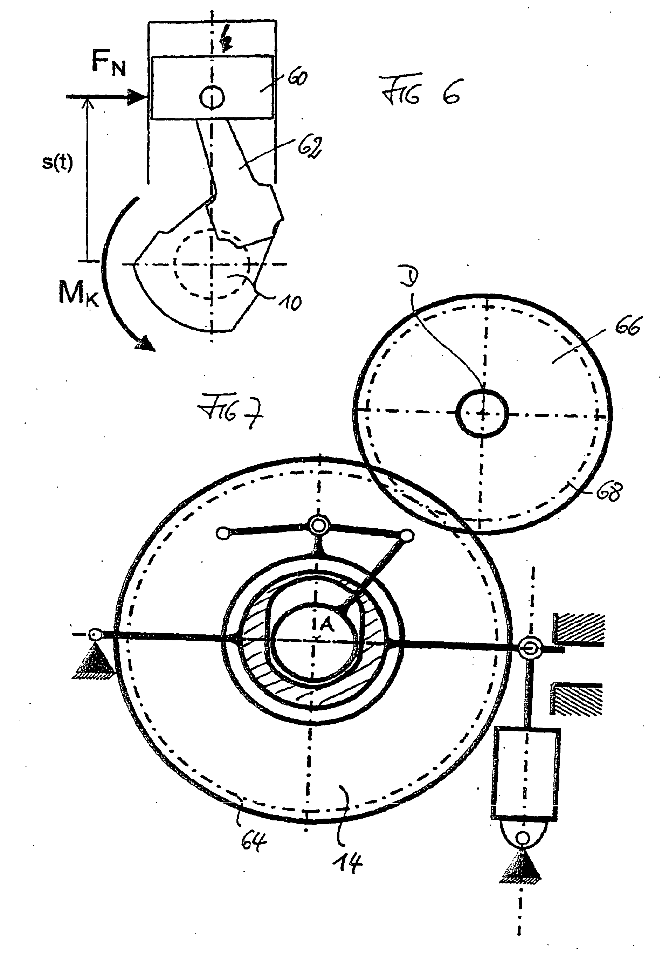

Fig. 6 zeigt schematisch einen Kolben 60 eines Zylinders einer Hubkolbenbrennkraftmaschine, der über einen Pleuel 62 in an sich bekannter Weise mit der Kurbelwelle 10 verbunden ist. Bei Viertaktbetrieb erfolgt in bekannter Weise während zweier Kurbelwellenumdrehungen nur ein Arbeitstakt, in dem vom Kolben 60 ein Antriebsdrehmoment MK auf die Kurbelwelle 10 aufgebracht wird. Die Neigung des Pleuels 62 relativ zu Senkrechten führt dazu, dass sich der Kolben 60 mit Seitenkräften an der Zylinderwand abstützt. Diese Seitenkräfte können dadurch ausgeglichen werden, dass ein Stützmoment FN x s(t) auf das Zylinderkurbelgehäuse aufgebracht wird.

Fig. 7 zeigt ein Beispiel, wie ein solches Stützmoment auf das Zylinderkurbelgehäuse aufgebracht wird. Dazu wird im dargestellten Beispiel die Anordnung gemäß Fig. 1 derart erweitert, dass das Ausgleichsmassebauteil 14 mit einer Umfangsverzahnung 64 versehen wird, und im Abstand von der Drehachse A der Kurbelwelle am Motorgehäuse um eine Achse D drehbar ein weiteres Ausgleichsmassebauteil 66 gelagert wird, das mit einer Umfangsverzahnung 68 ausgebildet ist, deren Durchmesser halb so groß ist wie der Durchmesser der Umfangsverzahnung 64. Dadurch dreht sich das weitere Ausgleichsmassebauteil 66 mit gegenüber der Drehgeschwindigkeit des Ausgleichsmassebauteils 14 doppelter Drehgeschwindigkeit, wobei es die Drehungleichförmigkeiten des Ausgleichsmassebauteils 14 voll mitmacht. Auf diese Weise lässt sich das zusätzliche Ausgleichsmassebauteil 66 zur Erzeugung eines die Kolbenseitenkräfte kompensierenden Stützmoments gemäß Fig. 6 nutzen, im dargestellten Beispiel für einen 4-Zylinder Viertaktmotor.

An dieser Stelle sei nochmals darauf hingewiesen, dass das Ausgleichsmassebauteil 14 und das weitere Ausgleichsmassebauteil 66 bezüglich ihrer Drehachsen vorteilhafterweise ausgewuchtet sind. Sie können scheibenförmig oder sonst wie ausgebildet sein. Das zusätzliche Ausgleichsmassebauteil 66 lässt sich als Antrieb für einen an sich bekannten Zweiwellenausgleich zweiter Ordnung für die freien Massenkräfte nutzen. Im Unterschied zur konventionellen Drehungleichförmigkeitsdampfung mit Hilfe einer Schwungscheibe wird erfindungsgemäß die Winkelgeschwindigkeit des Ausgleichsmassebauteils gezielt im Wesentlichen gleichphasig zu der der Kurbelwelle verändert. Dadurch kann das Trägheitsmoment des Ausgleichmassebauteils kleiner sein als das herkömmlicher Schwungscheiben, so dass der Motor gut auf Gaspedalstellungsänderungen reagiert.

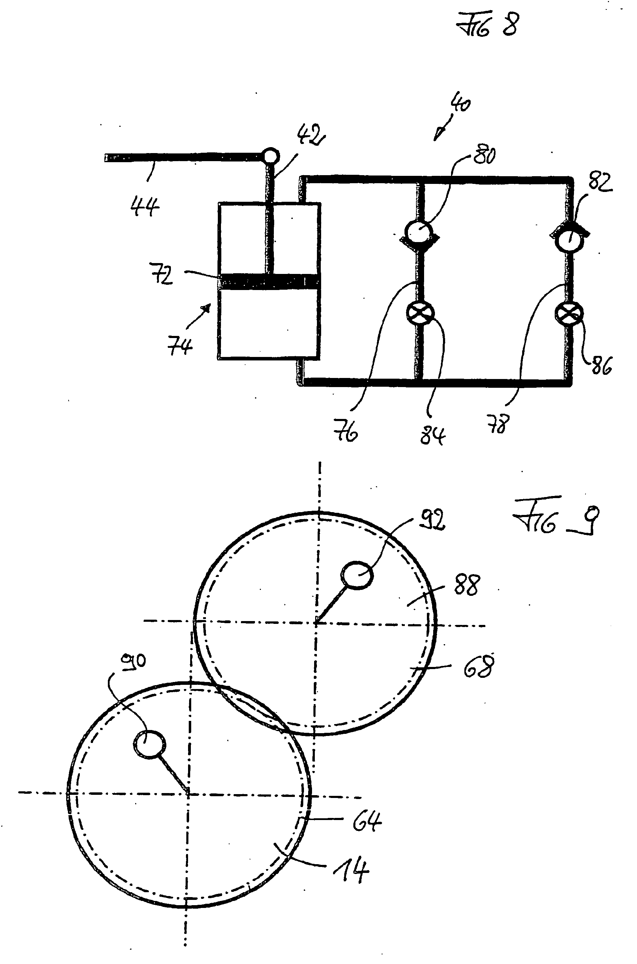

Fig. 8 zeigt schematisch eine besonders einfache Ausführungsform einer Verstelleinrichtung 40. Der Arm 44 des Lagerschildes 16 (Fig. 1) ist gelenkig mit einem als Stellglied 42 dienenden Schaft eines Kolbens 72 einer doppelt wirkenden Kolbenzylindereinheit 74 verbunden, deren Druckräume über zwei Leitungen 76 und 78 miteinander verbunden sind. In jeder der Leitungen 76 und 78 ist ein Rückschlagventil 80 und 82 angeordnet, wobei die Rückschlagventile 80 und 82 gegensinnig zueinander wirken. Weiter ist in jeder der Leitungen ein Absperrventil 84 bzw. 86 angeordnet.

Durch die exzentrische Lagerung des Lagerschildes 16 wirken auf den Arm 44 während einer Umdrehung des Ausgleichsmassebauteils 14 alternierend Kräfte, die gemäß den Figuren nach oben oder nach unten gerichtet sind. Je nach Öffnung eines der Absperrventile 84 oder 86 kann ein in der Kolbenzylindereinheit 74 befindliches Hydraulikfluid nur von dem einen Druckraum in den anderen strömen, so dass durch zweckentsprechende Steuerung der Absperrventile 84 und 86 eine Verstellung in die eine oder in die andere Richtung erfolgt, ohne dass dazu eine externe Druckmittelquelle erforderlich ist. Es versteht sich, dass durch eine geeignete Hydraulikfluid-Nachfülleinrichtung sichergestellt ist, dass die Leitungen und die Kolbenzylindereinheit ständig luftfrei mit Hydraulikfluid gefüllt sind.

Anhand der Fig. 9 wird eine Möglichkeit erläutert, wie erfindungsgemäß nicht nur Drehungleichförmigkeiten der Kurbelwelle ausgeglichen werden können, sondern zusätzlich ein Massenausgleich bei einem 1-Zylinder Zweitaktmotor oder einem 2-Zylinder Viertaktmotor erfolgen kann. Das mit 14 bezeichnete Ausgleichsmassebauteil der Fig. 9 entspricht dem Ausgleichsmassebauteil 14 der Ausführungsform gem. Fig. 5, deren restliche Teile in Fig. 9 der Einfachheit halber nicht dargestellt sind. Das Ausgleichsmassebauteil 14 weist eine Umfangsverzahnung 64 auf, die mit einer Umfangsverzahnung 68 eines weiteren Ausgleichsmassebauteils 88 kämmt. Mit 90 und 92 sind Unwuchten der Ausgleichsmassebauteile bezeichnet, das heißt das Ausgleichsmassebauteil 14 ist im Gegensatz zu der bevorzugten Ausbildung bezüglich seiner Drehachse nicht ausgewuchtet, sondern weist eine gezielte Unwucht 90 auf. Die Unwuchten 90 und 92 sind bevorzugt einander gleich und derart angeordnet, dass sie sich gemäß Fig. 5 jeweils gleichzeitig in senkrechter Stellung befinden, das heißt gleichzeitig den OT und den UT durchlaufen und bei waagrechter Stellung gegenphasig angeordnet sind. Die Anordnung wird, wie anhand der Fig. 5 bereits erläutert, bevorzugt zum Ausgleich von Drehungleichförmigkeiten der Kurbelwelle eines 1-Zylinder Zweitaktmotors oder 2-Zylinder Viertaktmotors verwendet. Wenn die Unwuchten bezüglich des Kolbens eines 1-Zylinder Zweitaktmotors oder der Kolben eines 2-Zylinder Viertaktmotors derart angeordnet sind, dass sie sich im UT befinden, wenn sich der bzw. die Kolben im OT befinden, lässt sich mit der Anordnung gemäß Fig. 5 für die genannten Motoren ein Massenausgleich erzielen.

Die im Vorstehenden beispielhaft geschilderten erfindungsgemäßen Vorrichtungen können in vielfältiger Weise abgeändert werden. Bspw. kann die Verstelleinrichtung 40 in ihrer Ausführungsform für die Figuren 1, 2, 5 und 7 einen Hydraulikzylinder enthalten, dessen Hydraulikmittel unter Druck stehender Kraftstoff, bspw. aus einem Common-Rail-System abgezweigter Dieselkraftstoff, ist, so dass keine gesonderte Hydraulikdruckquelle erforderlich ist. Der Hydraulikzylinder wird in an sich bekannter Weise mittels Ventilen gesteuert, die von einer elektronischen Steuereinrichtung in Abhängigkeit von dem am jeweiligen Lastpunkt der Brennkraftmaschine erforderlichen Drehmomentschwankungsausgleich betätigt werden. Die geschilderte Verschwenkung des Lagerschildes 16 kann durch eine lineare Bewegbarkeit des Lagerschildes in einer motorgehäusefesten Kulisse ersetzt werden. Die Erfindung eignet sich sowohl zur Anwendung an Hubkolbenbrennkraftmaschinen oder als auch an Drehkolbenbrennkraftmaschinen.

An Stelle oder zusätzlich zur Verstellbarkeit des Lagerschildes 16 kann das Ausgleichsmassebauteil 14 derart ausgebildet werden, dass sein Trägheitsmoment 14 veränderbar ist, bspw. indem das Ausgleichsmassebauteil zwei in ihrem Abstand veränderbare Massenkörper enthält. Durch Verändern des Trägheitsmoments lässt sich die Vorrichtung an die jeweils auszugleichenden Drehungleichförmigkeiten anpassen.

Die erfindungsgemäße Vorrichtung mit dem Ausgleichsmassebauteil und der Kupplung mit der Kurbelwelle kann unterschiedlich angeordnet werden, beispielsweise an einem Ende der Kurbelwelle oder - bei mehrzylindrischen Motoren - zwischen den Kolben. An einer Kurbelwelle können mehrere erfindungsgemäße Vorrichtungen vorgesehen sein.

### Bezugszeichenliste

- 10: Kurbelwelle
- 12: Mitnehmeransatz
- 14: Ausgleichsmassebauteil
- 16: Lagerschild
- 20: Durchgangsöffnung
- 22: Führungskoppel
- 24: radialer Arm
- 26: Koppelglied
- 28: Koppelglied
- 29: Gelenk
- 40: Verstelleinrichtung
- 42: Stellglied
- 44: Arm
- 46: Arm
- 48: Anschlag
- 50: Anschlag
- 52: Koppelglied
- 54: Arm
- 56: Arm
- 58: Koppelglied
- 60: Kolben
- 62: Pleuel
- 64: Umfangsverzahnung
- 66: Ausgleichsmassebauteil
- 68: Umfangsverzahnung
- 72: Kolben
- 74: Kolben/Zylindereinheit
- 76: Leitung
- 78: Leitung
- 80: Rückschlagventil
- 82: Rückschlagventil
- 84: Absperrventil
- 86: Absperrventil
- 88: Ausgleichsmassebauteil
- 90: Unwucht
- 92: Unwucht

## Patentansprüche

1. Verfahren zum Vermindern von Drehungleichförmigkeiten der Kurbelwelle (10) einer Kolbenbrennkraftmaschine, bei welchem Verfahren ein um eine Achse drehbares Ausgleichsmassebauteil (14) mit der Kurbelwelle (10) derart gekoppelt ist, dass in Phasen, in denen die Winkelgeschwindigkeit der Kurbelwelle ohne Kopplung mit dem Ausgleichsmassebauteil zunehmen würde, die Winkelgeschwindigkeit des Ausgleichsmassebauteils relativ zur Winkelgeschwindigkeit der Kurbelwelle zunimmt, und in Phasen, in denen die Winkelgeschwindigkeit der Kurbelwelle ohne Kopplung mit dem Ausgleichsmassebauteil abnehmen würde, die Winkelgeschwindigkeit des Ausgleichsmassebauteils relativ zur Winkelgeschwindigkeit der Kurbelwelle abnimmt, auch wenn die Winkelgeschwindigkeit der mit dem Ausgleichsmassebauteil gekoppelten Kurbelwelle konstant ist.

2. Verfahren nach Anspruch 1, wobei die Größe der Zunahme und Abnahme der Winkelgeschwindigkeit des Ausgleichsmassebauteils (14) relativ zur Winkelgeschwindigkeit der Kurbelwelle (10) veränderbar ist.

3. Verfahren nach Anspruch 1, wobei das Trägheitsmoment des Ausgleichsmassebauteils (14) in Anpassung an jeweils auszugleichende Drehgleichunförmigkeiten veränderbar ist.

4. Vorrichtung zum Vermindern von Drehungleichförmigkeiten der Kurbelwelle (10) einer Kolbenbrennkraftmaschine, mit einem um eine Achse drehbaren Ausgleichsmassebauteil (14) und einer Kopplungseinrichtung, mittels der das Ausgleichsmassebauteil derart mit der Kurbelwelle gekoppelt ist, dass die Winkelgeschwindigkeit des Ausgleichsmassebauteils in Phasen, in denen die Winkelgeschwindigkeit der Kurbelwelle ohne deren Kopplung mit dem Ausgleichsmassebauteil zunehmen würde, zunimmt, und in Phasen, in denen die Winkelgeschwindigkeit der Kurbelwelle ohne deren Kopplung mit dem Ausgleichsmassebauteil abnehmen würde, abnimmt, auch wenn die Winkelgeschwindigkeit der mit dem Ausgleichsmassebauteil gekoppelten Kurbelwelle konstant ist.

5. Vorrichtung nach Anspruch 4, wobei die Kopplungseinrichtung ein Getriebe enthält, das das Ausgleichsmassebauteil während einer Umdrehung der Kurbelwelle (10) mit relativ zur Winkelgeschwindigkeit der Kurbelwelle wenigstens einmal zunehmender und abnehmender Winkelgeschwindigkeit drehantreibt.

6. Vorrichtung nach Anspruch 5, wobei das Ausgleichmassebauteil (14) gleichachsig zur Kurbelwelle (10) gelagert ist.

7. Vorrichtung nach Anspruch 6, wobei das Getriebe eine exzentrisch zur Kurbelwelle drehbar gelagerte Führungskoppel (22) enthält, die über wenigstens ein Koppelglied (26; 52) mit einem drehfest mit der Kurbelwelle verbundenen Mitnehmeransatz (12) gekoppelt ist und über wenigstens ein weiteres Koppelglied (28; 58) mit dem Ausgleichsmassebauteil (14) verbunden ist, wobei die Achsen aller Gelenkverbindungen zwischen den Koppelgliedern, der Führungskoppel und dem Mitnehmeransatz parallel zur Drehachse der Kurbelwelle sind.

8. Vorrichtung nach Anspruch 7, wobei der Mitnehmeransatz (12) über ein Übersetzungsgetriebe mit der Kurbelwelle (10) drehfest verbunden ist.

9. Vorrichtung nach Anspruch 7 oder 8, wobei das Ausgleichsmassebauteil (14) zwischen dem Mitnehmeransatz (12) und der Führungskoppel (22) auf der Kurbelwelle gelagert ist.

10. Vorrichtung nach einem der Ansprüche 7 bis 9, wobei eine Verbindungslinie zwischen der Drehachse C der Führungskoppel (22) und der Drehachse A der Kurbelwelle (10) in Aufsicht auf die Drehachsen etwa mit der Bewegungslinie eines mit der Kurbelwelle verbundenen Kolbens einer Hubkolbenbrennkraftmaschine zusammenfällt.

11. Vorrichtung nach einem der Ansprüche 7 bis 9, wobei die Führungskoppel (22) an einem Lagerschild (16) gelagert ist, dessen Abstand von der Drehachse A der Kurbelwelle (10) veränderbar ist.

12. Vorrichtung nach Anspruch 11, wobei ein Antrieb (40) zur Verstellung des Abstandes der Drehachse C der Führungskoppel (22) von der Drehachse A der Kurbelwelle (10) einen Hydraulikzylinder enthält, der an eine Kraftstoffdruckleitung der Kolbenbrennkraftmaschine angeschlossen ist.

13. Vorrichtung nach einem der Ansprüche 7 bis 12, wobei der Mitnehmeransatz (12) über ein erstes Koppelglied (26) mit der Führungskoppel (22) verbunden ist, die über ein weiteres Koppelglied (28) mit dem Ausgleichsmassebauteil (14) verbunden ist, wobei die Koppelglieder bei exzentrisch zur Kurbelwelle angeordneter Führungskoppel während einer Umdrehung der Kurbelwelle zweimal eine Strecklage durchlaufen.

14. Vorrichtung nach einem der Ansprüche 7 bis 12, wobei der Mitnehmeransatz (12) und die Führungskoppel (22) über einen Arm (54) eines zweiarmigen Koppelgliedes (52) verbunden sind, dessen anderer Ann (56) über ein weiteres Koppelglied mit dem Ausgleichsmassebauteil (14) verbunden ist, wodurch eine radiale Relativbewegung zwischen der Führungskoppel und der Kurbelwelle (10) in eine Relativdrehung zwischen der Kurbelwelle und dem Ausgleichsmassebauteil umgewandelt wird, die einmal pro Umdrehung der Kurbelwelle voreilend und nacheilend ist.

15. Vorrichtung nach einem der Ansprüche 7 bis 14, enthaltend eine von dem Ausgleichsmassebauteil (14) mit vorbestimmter Übersetzung drehangetriebenes weiteres Ausgleichsmassebauteil (66; 88).

16. Vorrichtung nach Anspruch 14 und Anspruch 15, wobei beide Ausgleichsbauteile mit gleicher Drehzahl gegensinnig drehen und Unwuchten aufweisen, die sich im UT befinden, wenn sich der Kolben eines 1-Zylinder Zweitaktmotors oder die Kolben eines 2-Zylinder Viertaktmotors im OT befinden.

## Claims

1. A method for reducing rotational non-uniformities of the crankshaft (10) of a piston internal combustion engine, wherein a compensating mass member (14) which is rotatable about an axis and is coupled to a crankshaft (10) such that the angular speed of the compensating mass member increases relative to the angular speed of the crankshaft during phases in which the angular speed of the crankshaft would increase if it were not coupled to the compensating mass member, and the angular speed of the compensating mass member relative to the angular speed of the crankshaft decreases during phases in which the angular speed of the crankshaft would decrease if it were not coupled to the compensating mass member, even if the angular speed of the crankshaft coupled with the compensating mass member is constant.

2. The method according to claim 1, wherein the factor of increase and decrease of the angular speed of the compensating mass member (14) can be modified relative to the angular speed of the crankshaft 10.

3. The method according to claim 1, wherein the torque of inertia of the compensating mass member (14) is variable in adaption to the rotational non-uniformities to be compensated.

4. A device for reducing rotational non-uniformities of the crankshaft (10) of a piston internal combustion engine, comprising a compensating mass member (14), which is rotatable about an axis, and a coupling device by means of which the compensating mass member is connected to the crankshaft such that the angular speed of the compensating mass member increases during phases in which the angular speed of the crankshaft would increase if it were not coupled to the compensating mass member, and the angular speed of the compensating mass member decreases during phases in which the angular speed of the crankshaft would decrease if it were not coupled to the compensating mass member, even if the angular speed of the crankshaft coupled with the compensating mass member is constant.

5. The device according to claim 4, wherein the coupling device includes a transmission mechanism which rotatably drives the compensating mass member during each revolution of the crankshaft (10) with an angular speed that is at least once increasing and once decreasing relative to the angular speed of the crankshaft.

6. The device according to claim 5, wherein the compensating mass member (14) is supported coaxially with the crankshaft (10).

7. The device according to claim 6, the transmission mechanism comprising a rotatably supported guide link (22) eccentrically to the crankshaft, which guide link is connected to a dog projection (12), which is fixedly connected to the crankshaft, via at least one connecting member (26; 52), and connected to the compensating mass member (14) via at least one additional connecting member (28; 58), the axes of all hinge joints between the connecting members, the guide link and the dog projection being in parallel to the axis of rotation of the crankshaft.

8. The device according to claim 7, wherein the dog projection (12) is rotatably fixedly connected to the crankshaft (10) via a speed change transmission.

9. The device according to one of the claims 7 or 8, wherein the compensating mass member (14) is supported on the crankshaft between the dog projection (12) and the guide link (22).

10. The device according to one of the claims 7 to 9, wherein a connecting line between the axis of rotation C of the guide link (22) and the axis of rotation A of the crankshaft (10) approximately coincides with the line of movement of a piston of a piston combustion engine, which piston is connected to the crankshaft, when the axes of rotation are viewed from above.

11. The device according to one of claims 7 to 9, wherein the guide link (22) is supported on a bearing shield (16) whose distance to the axis of rotation A of the crankshaft (10) is variable.

12. The device according to claim 11, wherein an actuator (40) for adjusting the distance between the axis of rotation C of the guide link (22) and the axis of rotation A of the crankshaft (10) includes a hydraulic cylinder, which is connected to a fuel pressure conduit of the piston combustion engine.

13. The device according to one of the claims 7 to 12, wherein the dog projection (12) is connected to the guide link (22) via a first connecting member (26), which guide link is connected to the compensating mass member via a further connecting member (28), said connecting members passing an extended position twice during each revolution, if the guide link is arranged eccentrically to the crankshaft.

14. The device according to one of the claims 7 to 12, wherein the dog projection (12) and the guide link (22) are connected via an arm (54) of a two-armed connecting member (52), whose other arm (56) is connected to the compensating mass member (14) via a further connecting member, whereby a radial relative movement between the guide link and the crankshaft (10) is converted to a relative rotation between the crankshaft and the compensating mass member, which advances and lags once per revolution of the crankshaft.

15. The device according to one of the claims 7 to 14, comprising a further compensating mass member (66; 88) rotationally driven by the compensating mass member (14) at a predetermined transmission ratio.

16. The device according to claim 14 and claim 15, wherein both compensating mass members rotate at the same speed in opposite directions and exhibit unbalanced masses, which are at the bottom dead centre, when the piston of a 1-cylinder two-stroke engine or the pistons of a 2-cylinder four-stroke engine are at the upper dead centre.

## Revendications

1. Procédé pour réduire des irrégularités de rotation du vilebrequin (10) d'un moteur à combustion interne à piston, dans lequel procédé un composant massique de compensation (14) tournant autour d'un axe est couplé au vilebrequin (10) de sorte que, dans les phases dans lesquelles la vitesse angulaire du vilebrequin augmenterait sans couplage avec le composant massif de compensation, la vitesse angulaire du composant massique de compensation augmente par rapport à la vitesse angulaire du vilebrequin et que, dans les phases dans lesquelles la vitesse angulaire du vilebrequin diminuerait sans couplage avec le composant massique de compensation, la vitesse angulaire du composant massique de compensation diminue par rapport à la vitesse angulaire du vilebrequin, même si la vitesse angulaire du vilebrequin couplé au composant massique de compensation est constante.

2. Procédé selon la revendication 1, dans lequel la grandeur de l'augmentation et de la diminution de la vitesse angulaire du composant massique de compensation (14) peut être modifiée par rapport à la vitesse angulaire du vilebrequin (10).

3. Procédé selon la revendication 1, dans lequel le moment d'inertie du composant massique de compensation (14) peut être modifié pour s'adapter aux irrégularités de rotation à compenser respectivement.

4. Dispositif pour réduire les irrégularités de rotation du vilebrequin (10) d'un moteur à combustion interne à piston, comprenant un composant massique de compensation (14) tournant autour d'un axe et un dispositif de couplage, au moyen duquel le composant massique de compensation est couplé au vilebrequin de sorte que, dans les phases dans lesquelles la vitesse angulaire du vilebrequin augmenterait sans son couplage avec le composant massif de compensation, la vitesse angulaire du composant massique de compensation augmente et que, dans les phases dans lesquelles la vitesse angulaire du vilebrequin diminuerait sans son couplage avec le composant massique de compensation, la vitesse angulaire du composant massique de compensation diminue, même si la vitesse angulaire du vilebrequin couplé au composant massique de compensation est constante.

5. Dispositif selon la revendication 4, dans lequel le dispositif de couplage contient une transmission qui entraîne en rotation le composant massique de compensation au cours d'une rotation du vilebrequin (10) par rapport à la vitesse angulaire du vilebrequin à une vitesse angulaire qui augmente et diminue au moins une fois.

6. Dispositif selon la revendication 5, dans lequel le composant massique de compensation (14) est monté sur le même axe que le vilebrequin.

7. Dispositif selon la revendication 6, dans lequel la transmission contient une bielle de guidage (22) montée à rotation en mode excentrique par rapport au vilebrequin, laquelle bielle est couplée via au moins un élément de couplage (26 ; 52) avec un toc d'entraînement (12) lié solidaire en rotation au vilebrequin et lié via au moins un autre élément de couplage (28 ; 58) au composant massique de compensation (14), dans lequel les axes de toutes les articulations entre les éléments de couplage, la bielle de guidage et le toc d'entraînement sont parallèles à l'axe de rotation du vilebrequin.

8. Dispositif selon la revendication 7, dans lequel le toc d'entraînement (12) est lié solidaire en rotation au vilebrequin (10) via une transmission.

9. Dispositif selon la revendication 7 ou 8, dans lequel le composant massique de compensation (14) est monté entre le toc d'entraînement (12) et la bielle de guidage (22) sur le vilebrequin.

10. Dispositif selon l'une quelconque des revendications 7 à 9, dans lequel une ligne de jonction entre l'axe de rotation C de la bielle de guidage (22) et l'axe de rotation A du vilebrequin (10) coïncide plus ou moins, en observant les axes de rotation, avec la ligne de déplacement d'un piston - lié au vilebrequin - d'un moteur à combustion interne à piston alternatif.

11. Dispositif selon l'une quelconque des revendications 7 à 9, dans lequel la bielle de guidage (22) est montée sur un flasque (16) dont la distance à l'axe de rotation A du vilebrequin (10) peut être modifiée.

12. Dispositif selon la revendication 11, dans lequel un dispositif moteur (40) contient pour régler la distance de l'axe, de rotation C de la bielle de guidage (22) à l'axe de rotation A du vilebrequin (10) un cylindre hydraulique qui est raccordé à un conduit d'alimentation en carburant sous pression du moteur à combustion interne à piston.

13. Dispositif selon l'une quelconque des revendications 7 à 12, dans lequel le toc d'entraînement (12) est lié via un premier élément de couplage (26) à la bielle de guidage (22) qui est liée au composant massique de compensation (14) via une autre bielle de couplage (28), dans lequel dispositif les éléments de couplage passent deux fois par la position d'extension dans la bielle de guidage aménagée en mode excentrique par rapport au vilebrequin au cours d'une rotation de celui-ci.

14. Dispositif selon l'une quelconque des revendications 7 à 12, dans lequel le toc d'entraînement (12) et la bielle de guidage (22) sont liés via un bras (54) d'un élément de couplage (52) à deux bras, dont l'autre bras (56) est lié au composant massique de compensation (14) via un autre élément de couplage, moyennant quoi un mouvement relatif radial entre la bielle de guidage et le vilebrequin (10) est converti en une rotation relative entre le vilebrequin et le composant massique de compensation, qui est en avance et en retard une fois par rotation du vilebrequin.

15. Dispositif selon l'une quelconque des revendications 7 à 14, contenant un autre composant massique de compensation (66 ; 88) entraîné en rotation par le composant massique de compensation (14) avec un rapport de transmission prédéterminé.

16. Dispositif selon la revendication 14 et la revendication 15, dans lequel les deux composants de compensation tournent avec le même nombre de tours à contre-sens et présentent des balourds qui se trouvent au point mort bas lorsque le piston d'un moteur à deux temps à 1 cylindre ou les pistons d'un moteur à quatre temps à 2 cylindres se trouve(nt) au point mort haut.
